# EUROPÄISCHE PATENTSCHRIFT

(11) **EP 1 929 908 B1**
(45) Veröffentlichungstag und Bekanntmachung des Hinweises auf die Patenterteilung: **08.09.2010**
(21) Anmeldenummer: 07023405.9
(22) Anmeldetag: 04.12.2007
(51) Int. Cl.: A47J 39/00, F24C 15/16

(54) **Vorrichtung zum Bereitstellen temperierter Lebensmittel**
Device for preparing tempered food
Dispositif destiné à la préparation d'un produit alimentaire tempéré

(30) Priorität: 06.12.2006 DE 102006057807
(43) Veröffentlichungstag der Anmeldung: 11.06.2008
(73) Patentinhaber: Döhler & Gerweck Entwicklungs- und Montagetechnik GmbH, 75015 Bretten (DE)
(72) Erfinder: Döhler, Andreas, 76646 Bruchsal (DE); Gerweck, Daniel, 75015 Bretten (DE)
(74) Vertreter: Thämer, Wolfgang

(56) Entgegenhaltungen:
- EP-A- 1 116 465
- GB-A- 776 123

## Beschreibung

Die Erfindung betrifft eine Vorrichtung zum Bereitstellen temperierter Lebensmittel, die zumindest einen Lebensmitteltransportbehälter und eine Temperiervorrichtung umfasst, wobei die Temperiervorrichtung mindestens ein elektrisch betriebenes, in einem Heizelementträger angeordnetes Heizelement umfasst, das zumindest beim Betrieb der Vorrichtung innerhalb des Lebensmitteltransportbehälters angeordnet ist, wobei der Lebensmitteltransportbehälter einen zumindest bereichsweise den Innenraum umgebenden Innenkorpus aufweist, der zumindest zwei einander gegenüber angeordnete Seitenwände mit Führungsschienen und Innenwandflächen umfasst, wobei jeweils zwei einander gegenüber liegende Führungsschienen eine Tablettaufnahme bilden und wobei jede Tablettaufnahme breiter ist als der kleinste Abstand der Innenwandflächen. Die Erfindung betrifft weiterhin einen Innenkorpus und einen Lebensmitteltransportbehälter mit einem derartigen Innenkorpus.

Vorrichtungen zum Bereitstellen temperierter Lebensmittel sind beispielsweise auf Laufrollen verfahrbare Lebensmitteltransportbehälter mit angebauter Temperiervorrichtung sowie auf Laufrollen verfahrbare Lebensmitteltransportbehälter, die zur Speisenerwärmung an eine ortsfest angeordnete Temperiervorrichtung angeschlossen werden. Bei der erstgenannten Bauart kann die Erwärmung oder Kühlung der Lebensmittel z.B. in räumlicher Nähe zu den Verbrauchern erfolgen, während die Portionierung räumlich getrennt, beispielsweise in einem anderen Gebäude erfolgen kann. Die zweite Bauart wird beispielsweise eingesetzt, wenn eine große Anzahl portionierter Lebensmittel in einem räumlich engen Bereich verteilt werden soll, z.B. entlang eines Krankenhausflurs. In diesem Fall werden beispielsweise mehrere Lebensmitteltransportbehälter zeitlich zueinander versetzt an dieselbe ortsfeste Temperiervorrichtung, eine sogenannte Andockstation, angedockt.

Um ein zuverlässiges Temperieren der Lebensmittel zu ermöglichen, ist ein guter Wärmeübergang zwischen den Heizelementen und den zu erwärmenden Lebensmitteln erforderlich.

Aus der DE 10 2004 040 830 A1 ist ein Lebensmitteltransportbehälter mit angebauter Temperiervorrichtung bekannt. Die Heizelementträger haben eine Abstellfläche, auf der die in den Tablettaufnahmen geführten Tabletts aufliegen.

Aus der DE 20 2006 009 365 U1 ist eine ortsfeste Temperiervorrichtung mit höhenverstellbaren Heizelementträgern bekannt. Nach dem Anschluss eines Lebensmitteltransportbehälters an die Temperiervorrichtung werden die Heizelementträger mittels einer Hubvorrichtung angehoben und vor dem Abkoppeln mittels der Hubvorrichtung wieder abgesenkt.

In den in diesen Schriften beschriebenen Vorrichtungen sind unterschiedliche Relativbewegungen zwischen der Temperiervorrichtung, den Tabletts und den Tablettaufnahmen erforderlich. Hierdurch ergeben sich unterschiedliche Bauteile der Vorrichtung je nach ihrer Bauart.

Der vorliegenden Erfindung liegt daher die Aufgabe zugrunde, eine Vorrichtung zum Bereitstellen temperierter Lebensmittel zu entwickeln, deren Bauteile für beide Bauarten eingesetzt werden können.

Diese Aufgabe wird mit den Merkmalen des Hauptanspruches gelöst. Dazu ist mindestens an einem Ende einer jeden Führungsschiene ein Haltenocken angeordnet. Der Haltenocken ist beabstandet zu den die Führungsschiene und die Innenwandflächen verbindenden Übergangsbereichen.

Weitere Einzelheiten der Erfindung ergeben sich aus den Unteransprüchen und der nachfolgenden Beschreibung schematisch dargestellter Ausführungsformen.
- Figur 1:: Lebensmitteltransportbehälter mit angebauter Temperiervorrichtung;
- Figur 2:: Lebensmitteltransportbehälter mit ankoppelbarer Temperiervorrichtung;
- Figur 3:: Innenkorpus mit Heizelementträgern;
- Figur 4:: Seitenwand eines Innenkorpus;
- Figur 5:: Detail von Figur 4;
- Figur 6:: Innenkorpus mit Heizelementträgern;
- Figur 7:: Detail von Figur 6;
- Figur 8:: Tabletts in einem Lebensmitteltransportbehälter nach Figur 1;
- Figur 9:: Teilquerschnitt von Figur 8;
- Figur 10:: Anfahren eines Lebensmitteltransportbehälters an eine Andockstation;
- Figur 11:: Anheben der Tabletts;
- Figur 12:: Andockstation mit eingeschobenem Lebensmitteltransportbehälter;
- Figur 13:: Heizelementträger;
- Figur 14:: Seitenwand;
- Figur 15:: Dach oder Boden;
- Figur 16:: Verlängerungsstück.

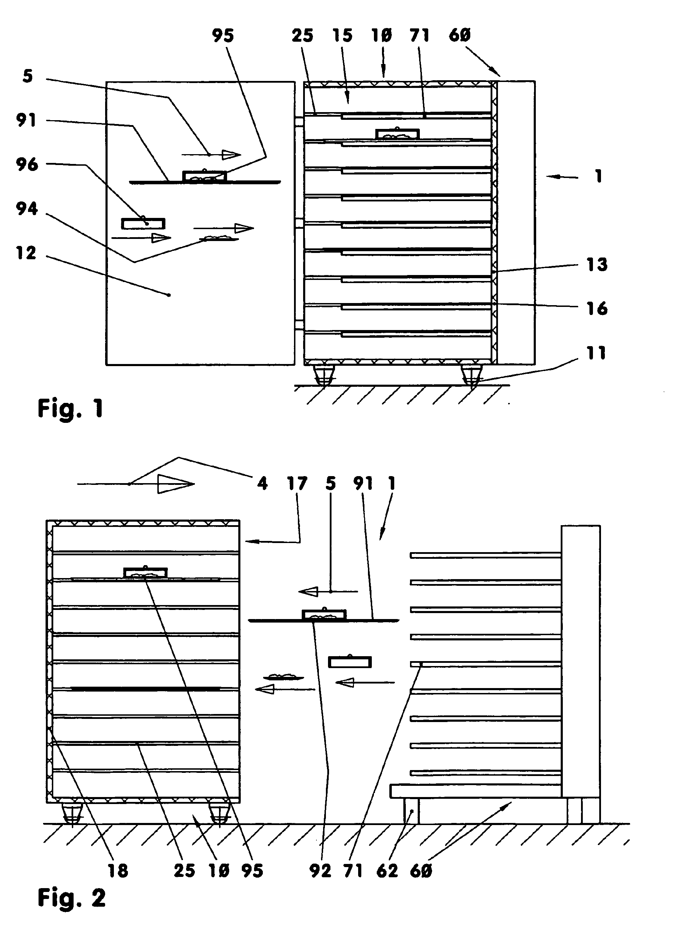

Die Figur 1 zeigt einen Längsschnitt einer Vorrichtung (1) zum Bereitstellen temperierter Lebensmittel, beispielsweise einen Lebensmitteltransportbehälter (10) mit angebauter Temperiervorrichtung (60). Der Lebensmitteltransportbehälter (10) steht auf z.B. feststellbaren Rollen (11) und ist beispielsweise mittels einer Tür (12) verschließbar. Die Temperiervorrichtung (60) umfasst für die elektrische Ansteuerung z.B. einen sogenannten Induktionsgenerator und beispielsweise neun übereinander angeordnete Heizelementträger (71), die in den Innenraum (15) des Lebensmitteltransportbehälters (10) ragen. Die Temperiervorrichtung (60) verschließt die der Tür (12) gegenüberliegende Stirnseite (13) des Lebensmitteltransportbehälters (10).

Im Innenraum (15) des Lebensmitteltransportbehälters (10) liegen auf den Heizelementträgern (71) Tabletts (91) auf, die beispielsweise entlang in den Seitenwänden (21, 22) eingeprägter Führungsschienen (25) geführt sind. Auf den Tabletts (91) stehen auf Tellern (94) portionierte Speisen (95), die mittels einer Abdeckhaube (96) abgedeckt sein können.

Um den Lebensmitteltransportbehälter (10) zu befüllen, werden z.B. die Tabletts (91) mit den gefüllten Tellern (94) und gegebenenfalls der Abdeckhaube (96) in der Einsetzrichtung (5) in die durch zwei einander gegenüberliegende Führungsschienen (25) gebildete Tablettaufnahmen (23) eingeschoben. Die Tabletts (91) liegen dann beispielsweise auf den Heizelementträgern (71) auf. Es ist auch denkbar, die gefüllten Teller (94) auf ein in der Tablettaufnahme (23) sitzendes Tablett (91) zu stellen. Nach dem Schließen der Tür (12) kann die Temperiervorrichtung (60) eingeschaltet werden. Die Entnahme der temperierten Speisen (95) erfolgt in der umgekehrten Richtung.

In der Figur 2 ist als Vorrichtung (1) ein verfahrbarer Lebensmitteltransportbehälter (10) und eine ankoppelbare, feststehende Temperiervorrichtung (60) im Längsschnitt dargestellt. Eine Stirnseite (18) des Lebensmitteltransportbehälters (10) ist verschlossen. Die dieser Stirnseite (18) entgegengesetzt angeordnete Einsetzöffnung (17) kann gegebenenfalls mittels einer - hier nicht dargestellten - Tür verschließbar sein. Die Temperiervorrichtung (60) umfasst in diesem Ausführungsbeispiel neun auskragende Heizelementträger (71).

Um die Speisen (95) zu temperieren, werden diese in der Einsetzrichtung (5) auf Tellern (94) und/oder auf Tabletts (91) durch die Einsetzöffnung (17) in den Lebensmitteltransportbehälter (10) eingesetzt, wie im Zusammenhang mit der Figur 1 beschrieben. Der Lebensmitteltransportbehälter (10) wird dann in der Einschubrichtung (4) auf die Temperiervorrichtung (60) aufgeschoben und verrastet beispielsweise automatisch oder manuell betätigt mit dieser. Die Temperiervorrichtung (60) verschließt in dieser Betriebsstellung die Einsetzöffnung (17) des Lebensmitteltransportbehälters (10), so dass die Heizelementträger im Innenraum (15) des Lebensmitteltransportbehälters (10) angeordnet sind.

Nachdem der Lebensmitteltransportbehälter (10) mit der Temperiervorrichtung (60) verbunden ist und mittels dieser verschlossen ist, kann die Vorrichtung (1) in Betrieb genommen werden. Um die temperierten Speisen (95) zu entnehmen, wird zunächst die Temperiervorrichtung (60) abgeschaltet und vom Lebensmitteltransportbehälter (10) getrennt. Nun können die Teller (94) mit den Speisen (95), mit oder ohne Tabletts (91), entnommen werden.

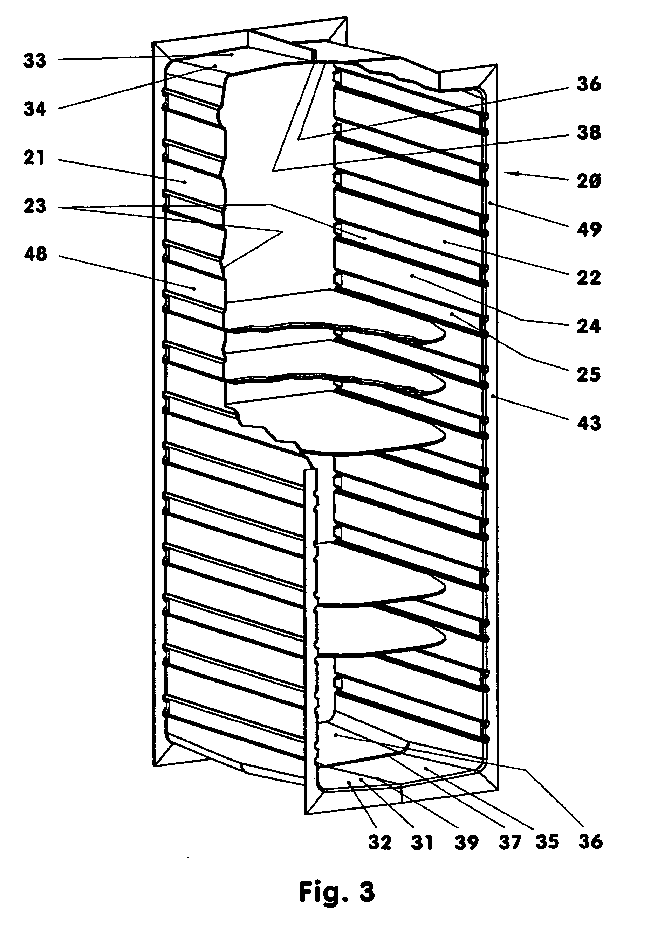

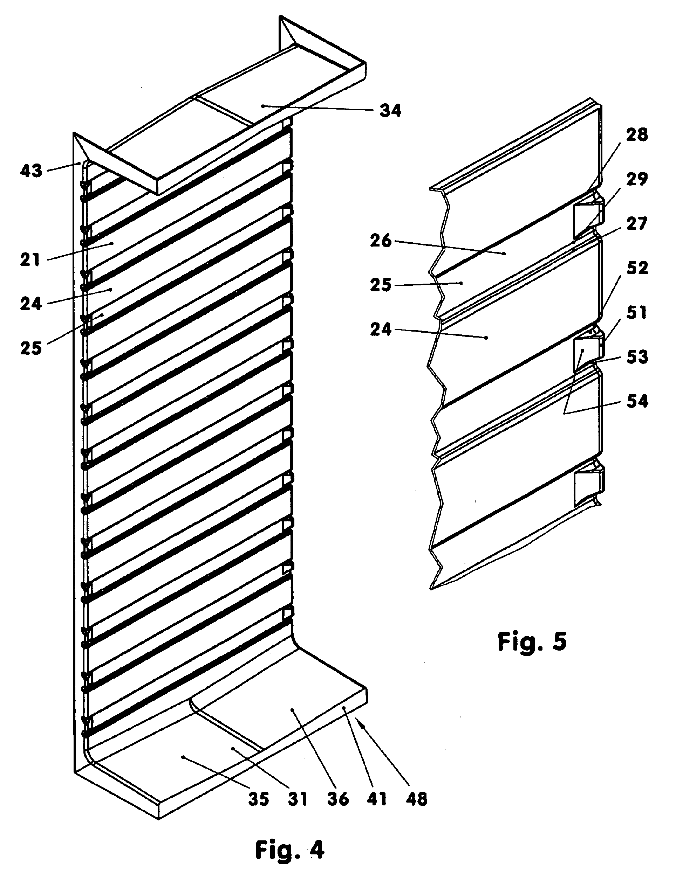

Die Figur 3 zeigt den Innenkorpus (20) des Lebensmitteltransportbehälters (10), der die dem Innenraum (15) zugewandten Seitenwände (21, 22), ein Dach (33) und einen Boden (31) umfasst. In dem Innenkorpus (20) sind beispielsweise fünf Heizelementträger (71) angeordnet. Der in diesem Ausführungsbeispiel dargestellte Innenkorpus (20) hat beispielsweise eine Länge von 750 Millimetern, eine Breite von 600 Millimetern und eine Gesamthöhe von 1450 Millimetern. Dieser Innenkorpus (20) besteht beispielsweise aus zwei spiegelbildlich zueinander angeordneten Formteilen (48, 49), die den Innenkorpus (20) in seiner Längsrichtung teilen. Jedes dieser Formteile (48, 49), vgl. Figur 4, umfast eine Seitenwand (21; 22), einen Teil (32) des Bodens (31) und einen Teil (34) des Daches (33). Die beiden Formteile (48, 49) können zueinander spiegelbildlich oder identisch ausgebildet sein.

Das Dach- (34) und das Bodenteil (32) sind z.B. spiegelbildlich zueinander ausgebildet. Sie umfassen jeweils zwei schräge Flächen (35, 36), die in der Längsrichtung des Innenkorpus (20) einen stumpfen Winkel, z.B. 160 Grad, einschließen. Im Bodenteil (32) ist dies eine Senke (37), im Dachteil (34) eine Erhöhung (38). Außerdem sind die Flächen (35, 36) in Querrichtung des Innenkorpus (20) geneigt, so dass die zwei aneinandergrenzenden Formteile (48, 49) eine zentrale, in Längsrichtung orientierte Nut (39) aufweisen. Zur Anlage an das jeweilige andere Formteil (48; 49) weist der Boden- (32) und der Dachteil (34) eine Anlagefläche (41) auf, vgl. Figur 4. In der Anlagefläche (41) können Elemente zur formschlüssigen Verbindung mit dem jeweiligen Gegenstück (49; 48), z.B. Rastnasen und Durchbrüche, angeordnet sein.

Die einzelne Seitenwand (21, 22) weist beispielsweise dreizehn übereinander mit einem konstanten Abstand parallel zueinander angeordnete Führungsschienen (25) auf. Der Mittenabstand der Führungsschienen (25) zueinander beträgt jeweils z.B. 100 Millimeter, ihre Länge entspricht der Länge des Innenkorpus (20). Zwischen den Führungsschienen (25) liegen Innenwandbereiche (24).

Die einzelne Führungsschiene (25), vgl. die Figuren 4 und 5, hat in diesem Ausführungsbeispiel eine über ihre Länge konstante Höhe von 40 Millimetern und eine Tiefe von fünf Millimetern. Nach oben und nach unten wird die Führungsschiene (25) durch Übergangsbereiche (27, 28) begrenzt. Diese gehen in einer Längskehle (29) in den Schienengrund (26) und in Abrundungen in die Innenwandflächen (24) über.

An beiden Enden einer jeden Führungsschiene (25) sind im Schienengrund (26) Haltenocken (51) angeordnet, die zu den Übergangsbereichen (27, 28) beabstandet sind. Im Ausführungsbeispiel unterscheiden sich die beiden Abstände um z.B. 10 %. Der kleinere Abstand beträgt hier beispielsweise 7,5 Millimeter. Der Abstand der Haltenocken (51) zu den Übergangsbereichen (27, 28) kann jedoch auch gleich sein.

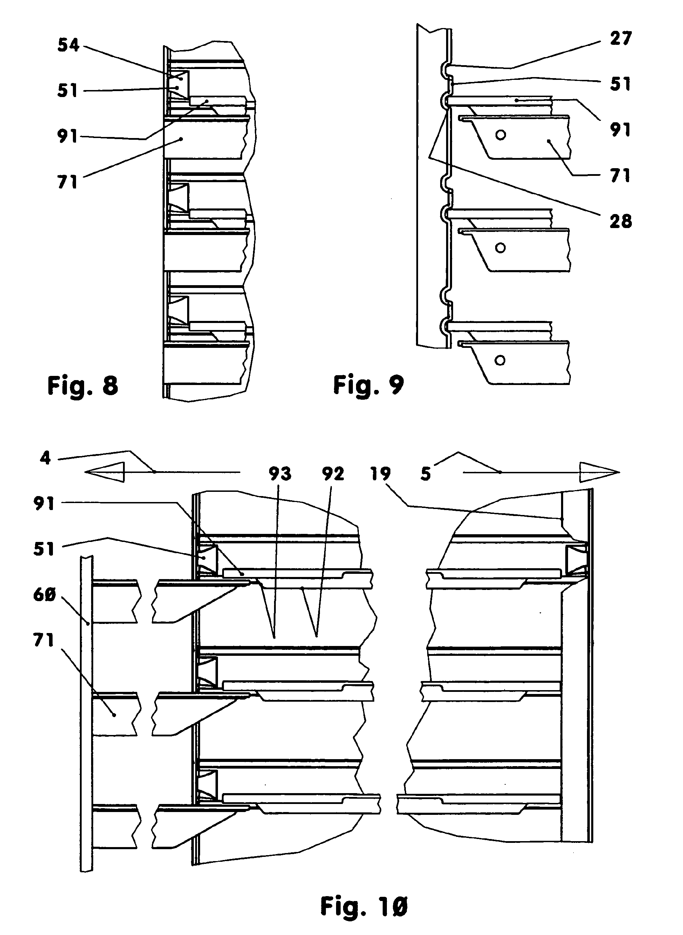

Die Haltenocken (51) haben in einer Schnittebene, die normal zum Schienengrund (26) und in Längsrichtung der Führungsschiene (25) orientiert ist, einen Querschnitt, der annähernd die Gestalt eines rechtwinkligen Dreiecks hat. Die rechten Winkel liegen an den Enden der jeweiligen Führungsschiene (25). Die in Richtung des Innenraum (15) des Lebensmitteltransportbehälters (10) orientierte Hypotenuse ist konkav gewölbt. Ihr Wölbungsradius beträgt z.B. 15 Millimeter. Die Länge der Haltenocken beträgt in diesem Ausführungsbeispiel 17,5 Millimeter, ihre Höhe normal zum Schienengrund (26) entspricht der Tiefe der Führungsschiene (25). Die zu den Übergangsbereichen (27, 28) zeigenden Flanken (52, 53) der Haltenocken (51) sind z.B. als Einführschrägen ausgebildet, so dass die Hypotenusefläche (54) in einer Draufsicht auf die Führungsschiene (25), vgl. Figur 8, eine trapezförmige Gestalt hat. Die beiden Flanken (52, 53) können unterschiedlich ausgebildet sein.

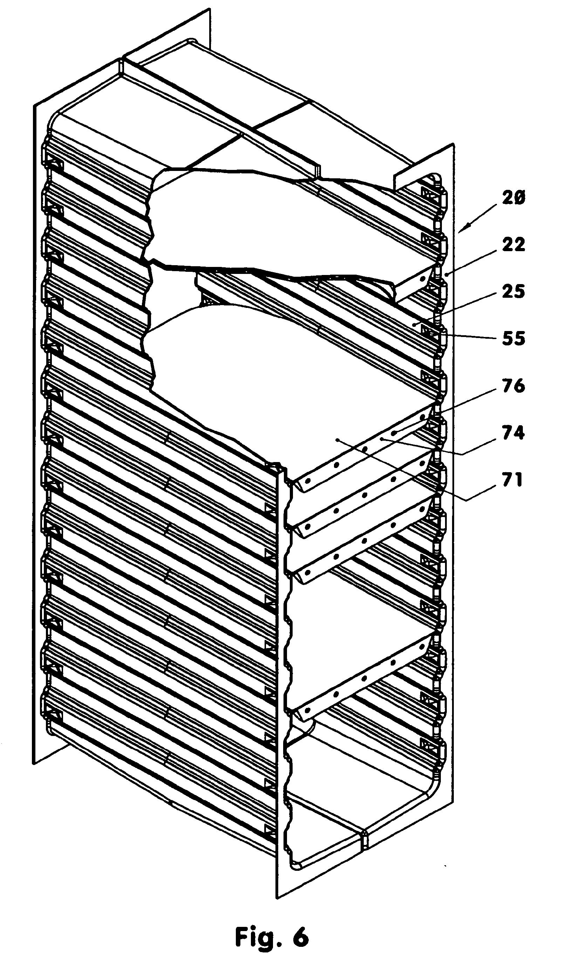

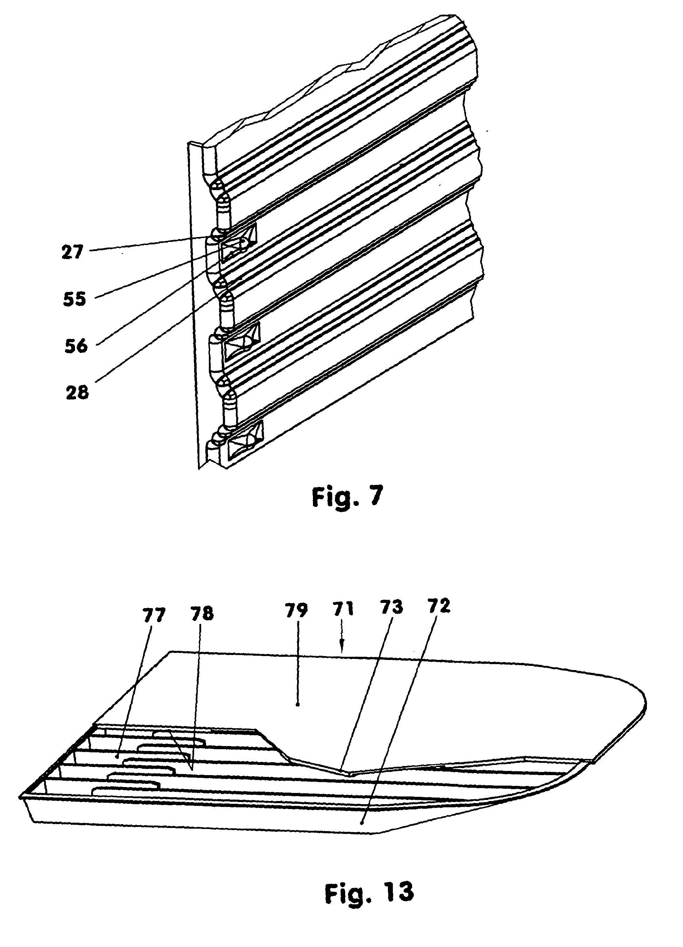

In dem in der Figur 6 dargestellten Innenkorpus (20) sind die Haltenocken (55) in der Längsrichtung spiegelbildlich zu ihrer vertikalen Mittelebene ausgebildet. Die Figur 7 zeigt ein Detail einer Seitenwand (21, 22) mit einem derartigen Haltenocken (55). Die außenliegenden, konkaven Flächen (56) sind z.B. Abweisflächen. Die Radien dieser Haltenocken (55) sind größer als die Radien der Haltenocken (51).

Der Innenkorpus (20) weist an seinen beiden Stirnseiten je einen umlaufenden Kragen (43) auf. Hiermit wird das Widerstandsmoment der Formteile (48, 49), die beispielweise eine zumindest annähernd konstante Wandstärke von zwei Millimetern haben, verstärkt. Gleichzeitig kann der Kragen (43) zur Befestigung des Innenkorpus (20) im Rahmen des Lebensmitteltransportbehälters (10) dienen.

Die einzelnen Heizelementträger (71) sind gleichartig aufgebaut. Jeder Tablettaufnahme (23) ist mindestens ein Heizelementträger (71) zugeordnet, der unterhalb der jeweiligen Tablettaufnahme (23) angeordnet ist. Oberhalb der obersten Tablettaufnahme (23) kann ein weiterer Heizelementträger (71) angeordnet sein. Die Heizelementträger (71) sind beim Betrieb der Vorrichtung (1) beispielsweise an einer stirnseitigen Verschlusswand des Innenraums (15) auskragend befestigt und sind mit der elektrischen Ansteuerung der Temperiervorrichtung (60) elektrisch verbunden.

Ein einzelner Heizelementträger (71) ist beispielsweise in der Figur 13 dargestellt. Dieser umfasst ein untenliegendes Tragteil (72) und ein obenliegendes Deckelteil (73). Die Länge des einzelnen Heizelementträgers (71) in der Längsrichtung des Innenkorpus (20) beträgt beispielsweise 65 % der Länge des Innenkorpus (20), die Breite des Heizelementträgers (71) 97 % der kleinsten Breite des Innenraums (15) des Lebensmitteltransportbehälters (10). Die obenliegende Planfläche (79) des Heizelementträgers (71) ist eine Tablettragfläche (79). Diese kann an der der Befestigungsseite (74) abgewandten Seite des Heizelementträgers (71) angefast oder einen nach unten geneigten Flächenabschnitt umfassen.

Das Tragteil (72) ist z.B. ein Kunststoffteil, das beispielsweise aus einem thermoplastischen, duroplastischen oder einem Verbundwerkstoff mit oder ohne Faserverstärkung oder metallischer Zwischenschicht hergestellt ist. Es kann zumindest teilweise aus einem metallischen Werkstoff hergestellt sein, z.B. aus einem rost- und säurebeständigen Stahl, aus Aluminium, etc. An der Befestigungsseite (74) weist das Tragteil (72) Durchbrüche (76) auf, z.B. zur Aufnahme von Befestigungselementen und/oder zur Durchführung elektrischer Leitungen. Das Tragteil (72) umfasst in diesem Ausführungsbeispiel eine obenliegende Ausnehmung (77).

Das Deckelteil (73) ist beispielsweise eine am Tragteil (72) befestigte Platte. Sie kann aus dem gleichen Werkstoff wie das Tragteil (72) gefertigt sein. Sie kann aber auch aus einem wärmeleitenden und/oder wärmeübertragenden Werkstoff hergestellt sein. An der der Ausnehmung (77) zugewandten Innenseite des Deckelteils (73) hat dieses Aufnahmeeinsenkungen (78), z.B. zur Aufnahme elektrischer Heizelemente, beispielsweise von Induktionsspulen, Heizleitern, etc.

Zur Herstellung der Einzelteile des Innenkorpus (20) werden beispielsweise zunächst Harzmatten mit oder ohne Faserverstärkung auf ein teilespezifisch vorbestimmtes Maß z.B. von einer Rolle abgetrennt. Die einzelne Harzmatte kann beispielsweise aus einem Schichtpressstoff auf Melaminharzbasis, einem Verbundwerkstoff, etc. hergestellt sein.

Diese Matten werden als Rohmaterial z.B. in ein Umformwerkzeug, beispielsweise eine Presse mit einem Stempel und einer Matrize, eingelegt. Beim Zusammenfahren des Stempels und der Matrize wird die Harzmatte umgeformt. Dies erfolgt beispielsweise unter gleichzeitiger Erwärmung der Harzmatte auf eine Temperatur zwischen 145 und 150 Grad Celsius. Beim Umformen - der Pressdruck beträgt beispielsweise 130 bar - entsteht ein Formteil zumindest annähernd konstanter Wandstärke, z.B. einer Wandstärke von zwei Millimetern. Der Umformvorgang dauert für ein derartiges Werkstück beispielsweise anderthalb Minuten. Je größer die Wandstärke des Formteils gewählt wird, desto länger ist die z.B. linear mit der Wandstärke ansteigende Umformzeit. Beispielsweise nach dem Umformen kann das in dem beschriebenen Heißpressverfahren erzeugte Formteil temperiert werden und seine Kanten bearbeitet werden.

Es ist auch denkbar, die Formteile in einem Vakuumumformverfahren herzustellen. Hierbei werden die Harzmatten z.B. auf eine Vorrichtung aufgelegt und die Harzmatten mittels einer Saugvorrichtung umgeformt.

Die beiden Formteile (48, 49) können nun miteinander gefügt werden oder form- und/oder kraftschlüssig miteinander verbunden werden. Beim Fügen werden die Formteile (48, 49) beispielsweise miteinander verklebt, verschweißt, etc. Als Kleber wird z.B. ein schnellaushärtender Zwei-Komponenten-Polyurethankleber eingesetzt. Hierbei entsteht beispielsweise eine fugenfreie Boden- und Dachfläche.

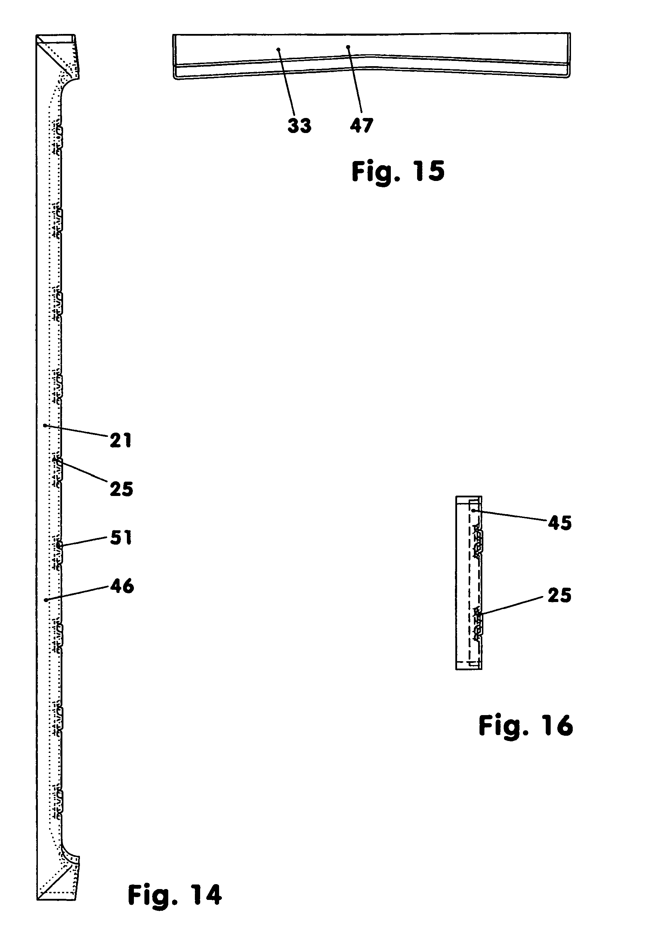

Es ist auch denkbar, den Innenkorpus (20) aus vier Formteilen (46, 47) aufzubauen. Diese Formteile (46, 47), vgl. die Figuren 14 und 15, sind beispielsweise zwei Seitenwandteile (46), ein Bodenstück und ein Dachstück (47). Jedes der Seitenwandteile (46) umfasst eine Seitenwand (21; 22). Die beiden Seitenwandteile (21, 22) können spiegelbildlich zueinander ausgeführt sein oder identisch sein. Das Bodenstück umfasst einen Boden (31) und das Dachstück (47) ein Dach (33). Der Boden kann spiegelbildlich zum Dach (34) oder identisch zu diesem ausgeführt sein. Die Seitenwände (21, 22), das Dach (33) und der Boden (31) sind so ausgeführt, wie im Zusammenhang mit den Ausführungsbeispielen der Figuren 3 - 7 beschrieben.

Bei einer Ausführung des Innenkorpus (20) mit vier Bauteilen können die Presswerkzeuge flacher gestaltet werden als bei der in den Figuren 2 bis 7 dargestellte Ausführung mit zwei Formteilen (48, 49). Bei einer identischen Ausführung jeweils zweier Teile sind nur zwei Presswerkzeuge erforderlich, wodurch eine kostengünstige Herstellung der Formteile ermöglicht wird.

Um die Höhe des Innenkorpus (20) zu variieren, können in allen Ausführungsbeispielen Verlängerungsstücke (45), vgl. Figur 16 in die Seitenwände (21, 22) eingesetzt werden. Diese haben beispielsweise eine Höhe von 200 Millimetern und umfassen zwei Führungsschienen (25).

Der Innenkorpus (20) wird nun beispielsweise in einen skelettartigen Rahmen eingesetzt. Die einzelnen Träger des Rahmens sind z.B. mittels langer Gewindestangen, die jeweils zwei einander gegenüberliegende Rahmenteile zueinander fixieren, miteinander verbunden. An der Außenseite des Rahmens werden beispielsweise Verkleidungsbleche befestigt. Der Zwischenraum zwischen dem Innenkorpus (20) und den Verkleidungsblechen wird z.B. mittels eines Polyurethanschaums ausgeschäumt. An den Rahmen können außerdem Türen angeschlagen werden.

Der so vorbereitete Rohbau des Lebensmitteltransportbehälters (10) - ohne Stirnwand (18), Temperiervorrichtung (60) und Laufrollen (11) - kann sowohl zum Aufbau eines Lebensmitteltransportbehälters (10) mit angebauter Temperiervorrichtung (60) als auch zum Aufbau eines Lebensmitteltransportbehälters (10) und einer feststehenden Temperiervorrichtung (60) eingesetzt werden.

Zum Aufbau eines Lebensmitteltransportbehälters (10) mit angebauter Temperiervorrichtung (60) wird der Rohbau beispielsweise so eingesetzt, dass der größere Abstand zwischen den Übergangsbereichen (27, 28) der Führungsschienen (25) und den Haltenocken (51) unten ist. An der Unterseite des so aufgestellten Rohbaus werden z.B. die Laufrollen (11) montiert. Die Temperiervorrichtung (60) mit einem Teil der Rückwand (16) und den Heizelementträgern (71) wird so in den Rohbau eingesetzt, dass die Tabletttragflächen (79) nach oben zeigen. Hierbei liegen die Planflächen (79) beispielsweise fünf Millimeter unterhalb des unteren Übergangsbereichs (28) der jeweiligen Tablettaufnahme (23).

Um einen Lebensmitteltransportbehälter (10) mit einer feststehenden Temperiervorrichtung (60) aufzubauen, wird der Rohbau auf der den Türen abgewandten Stirnseiten mittels einer Stirnwand (18) verschlossen. Gegebenenfalls kann an dieser Seite auf den Rahmen ein Verkleidungsblech aufgebracht werden und der Zwischenraum ausgeschäumt werden. Der Innenkorpus (20) wird beispielsweise so angeordnet, dass die kurzen Abstände zwischen den Haltenocken (51) und den Begrenzungen (27, 28) der Führungsschienen (25) nach unten zeigen. An der Unterseite des so aufgestellten Rohbaus werden z.B. die Laufrollen (11) montiert. An die Temperiervorrichtung (60) wird beispielsweise ein zur Voreinstellung in der Höhe justierbarer Aufstellfuß (62) angebracht.

Zum Beladen des Lebensmitteltransportbehälter (10) mit angebauter Temperiervorrichtung (60) wird das einzelne Tablett (91) - es hat beispielsweise eine Länge von 530 Millimetern und eine Breite von 370 Millimetern - in eine Tablettaufnahme (23) des Lebensmitteltransportbehälters (10) eingeschoben. Das Tablett (91) wird z.B. mittels der Haltenocken (51) geführt und gleitet entlang der Tabletttragfläche (79) beispielsweise bis zu einem Anschlag, vgl. Figur 8. Auf beiden Seiten liegt das Tablett (91) mit Spiel in den Führungsschienen (25) der Tablettaufnahme (23), vgl. Figur 9. Letztere ist breiter als der Abstand der Innenwandflächen (24).

Zum Temperieren der auf den Tabletts (91) gelagerten Speisen (95) wird der Lebensmitteltransportbehälter (10) mit der angebauten Temperiervorrichtung (60) an einer Netzsteckdose angeschlossen. Nach dem Schließen der Tür (12) und dem Einschalten der Temperiervorrichtung (60) werden die Speisen (95) induktiv oder über Kontaktwärme erhitzt. Das Herausnehmen der Tabletts (91) aus dem Lebensmitteltransportbehälter (10) erfolgt in der umgekehrten Reihenfolge.

Beim Beladen des von der Temperiervorrichtung (60) getrennten Lebensmitteltransportbehälters (10) werden die beladenen Tabletts (91) z.B. geführt durch die Haltenocken (51), in die Tablettaufnahmen (23) eingeschoben, wobei die Tabletts (91) seitlich in den Führungsschienen (25) aufliegen. Ist das Tablett (91) vollständig z.B. gegen einen Anschlag (19) eingeschoben, liegt die der Einsetzöffnung (17) zugewandte Stirnseite des Tabletts (91) in der Einsetzrichtung (5) hinter den Haltenocken (51), vgl. Figur 10.

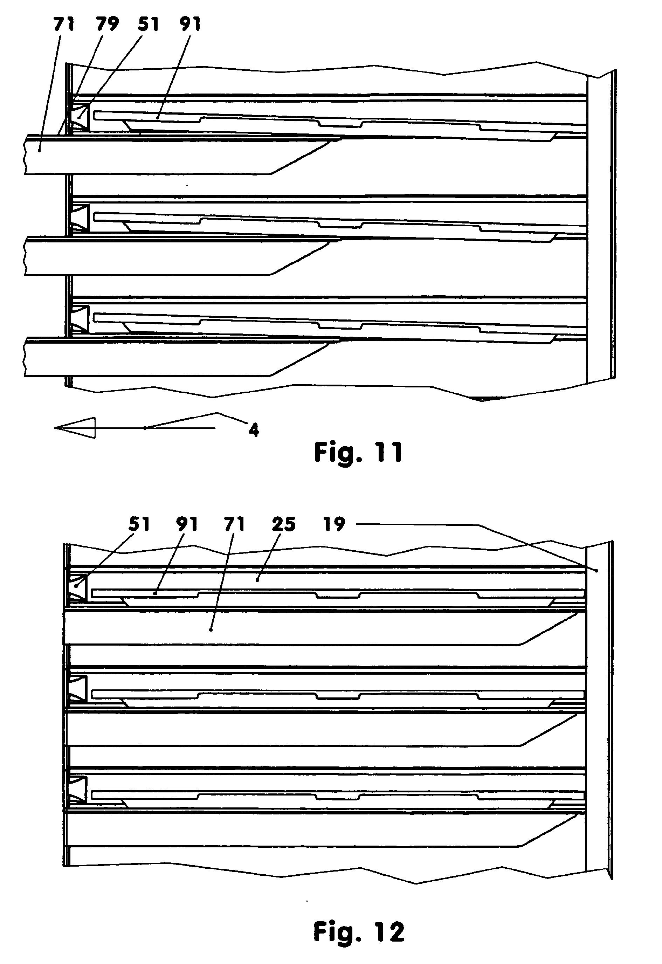

Das Einschieben des Lebensmitteltransportbehälters (10) in die Temperiervorrichtung (60) ist beispielsweise in den Figuren 10 - 12 dargestellt. Der Lebensmitteltransportbehälter (10) kann hierbei zusätzlich an der Temperiervorrichtung (60) zentriert sein. Die Tabletttragfläche (79) der Heizelementträger (71) liegt oberhalb der Tablettunterseite (92), so dass die Tabletts (91) beim Einschieben an die gegebenenfalls angeschrägten Heizelementträger (71) anstoßen, vgl. Figur 10. Beim weiteren Einschieben werden die Tabletts (91) entlang ihrer stirnseitigen Schrägfläche (93) angehoben, so dass sie auf die Heizelementträger (71) gleiten, vgl. Figur 11. Hierbei werden die Tabletts (91) in den Führungsschienen (25) angehoben. Bei vollständig auf die Temperiervorrichtung (60) geschobenen Lebensmitteltransportbehälter (10) sind die Tabletts (91) so weit angehoben, dass sie z.B. auf der Höhe der Mitte der Haltenocken (51) liegen, vgl. Figur 12.

Nach Beendigung der Erwärmung oder Kühlung der Speisen (95) wird der Lebensmitteltransportbehälter (10) wieder von der Temperiervorrichtung (60) getrennt. Beim Herausfahren des Lebensmitteltransportbehälters (10) werden die Tabletts (91) mittels der Temperiervorrichtung (60) gegen die Haltenocken (51) gezogen. Letztere halten die Tabletts (91) in den Tablettaufnahmen (23), bis der Lebensmitteltransportbehälter (10) vollständig von der Temperiervorrichtung (60) getrennt ist. Erst beim Heruntergleiten von den Heizelementträgern (71) sinken die Tabletts (91) unterhalb der Haltenocken (51), so dass sie beim späteren Bedarf ohne Schwierigkeiten aus dem Lebensmitteltransportbehälter (10) entnommen werden können.

Zur Reinigung des Lebensmitteltransportbehälters (10) wird die Temperiervorrichtung (60) je nach Bauart der Vorrichtung (1) herausgenommen oder demontiert. Der Innenraum (15) kann nun ausgespritzt werden. Aufgrund der Abrundungen aller Übergänge hat der Lebensmitteltransportbehälter (10) keine Ecken oder Kanten, in denen sich Schmutz ansammeln könnte.

Aufgrund des modularen Aufbaus der Vorrichtung (1) können die Formteile (45 - 49) auf Vorrat gefertigt werden. Je nach Bedarf werden sie dann für einen separaten Innenkorpus (20) als Ersatzteil, für einen Lebensmitteltransportbehälter (10) mit angebauter Temperiervorrichtung (60) oder für einen Lebensmitteltransportbehälter (10), der mit einer ortsfesten Temperiervorrichtung (60) betrieben wird, eingesetzt. Auch sind Ausführungen von Vorrichtungen (1) unterschiedlicher Höhe und/oder unterschiedlicher Breite oder Länge denkbar. Die Montage erfordert nur einen geringen Zeitaufwand.

### Bezugszeichenliste:

- 1: Vorrichtung zum Bereitstellen temperierter Lebensmittel

- 4: Einschubrichtung
- 5: Einsetzrichtung

- 10: Lebensmitteltransportbehälter
- 11: Laufrollen
- 12: Tür
- 13: Stirnseite

- 15: Innenraum
- 16: Rückwandteil
- 17: Einsetzöffnung
- 18: Stirnwand
- 19: Anschlag
- 20: Innenkorpus
- 21: Seitenwand
- 22: Seitenwand
- 23: Tablettaufnahmen
- 24: Innenwandflächen
- 25: Führungsschienen
- 26: Schienengründe
- 27: Übergangsbereiche
- 28: Übergangsbereiche
- 29: Längskehlen

- 31: Boden
- 32: Teil von (31)
- 33: Dach
- 34: Teil von (33)
- 35: schräge Flächen
- 36: schräge Flächen
- 37: Senke
- 38: Erhöhung
- 39: Nut

- 41: Anlagefläche

- 43: Kragen

- 45: Verlängerungsstück
- 46: Seitenwandteile
- 47: Dachstücke
- 48: Formteil
- 49: Formteil

- 51: Haltenocken
- 52: Flanke von (51)
- 53: Flanke von (51)
- 54: Hypotenuseflächen
- 55: Haltenocken
- 56: konkave Flächen

- 60: Temperiervorrichtung

- 62: Fuß

- 71: Heizelementträger
- 72: Tragteile
- 73: Deckelteile, Platte
- 74: Befestigungsseite

- 76: Durchbrüche
- 77: Ausnehmung
- 78: Aufnahmeeinsenkungen
- 79: Planfläche, Tabletttragfläche

- 91: Tabletts
- 92: Tablettunterseiten
- 93: Schrägflächen
- 94: Teller
- 95: Speisen
- 96: Abdeckhauben

## Patentansprüche

1. Vorrichtung (1) zum Bereitstellen temperierter Lebensmittel, die zumindest einen Lebensmitteltransportbehälter (10) und eine Temperiervorrichtung (60) umfasst,
- wobei die Temperiervorrichtung (60) mindestens ein elektrisch betriebenes, in einem Heizelementträger (71) angeordnetes Heizelement umfasst, das zumindest beim Betrieb der Vorrichtung innerhalb des Lebensmitteltransportbehälters (10) angeordnet ist,
- wobei der Lebensmitteltransportbehälter (10) einen zumindest bereichsweise den Innenraum (15) umgebenden Innenkorpus (20) aufweist, der zumindest zwei einander gegenüber angeordnete Seitenwände (21, 22) mit Führungsschienen (25) und Innenwandflächen (24) umfasst,
- wobei jeweils zwei einander gegenüber liegende Führungsschienen (25) eine Tablettaufnahme (23) bilden und
- wobei jede Tablettaufnahme (23) breiter ist als der kleinste Abstand der Innenwandflächen (24), **dadurch gekennzeichnet,**
- **dass** mindestens an einem Ende einer jeden Führungsschiene (25) ein Haltenocken (51; 55) angeordnet ist,
- **dass** der Haltenocken (51; 55) beabstandet ist zu den die Führungsschiene (25) und die Innenwandflächen (24) verbindenden Übergangsbereichen (27, 28).

2. Vorrichtung (1) nach Anspruch 1, **dadurch gekennzeichnet, dass** zumindest die beiden Seitenwände (21, 22) spiegelbildlich zueinander sind oder gleich sind.

3. Vorrichtung (1) nach Anspruch 1, **dadurch gekennzeichnet, dass** der Innenkorpus (20) ein Dach (33) und einen Boden (31) umfasst, wobei das Dach (33) und der Boden (31) spiegelbildlich zueinander sind oder gleich sind.

4. Vorrichtung (1) nach Anspruch 1, **dadurch gekennzeichnet, dass** der Abstand der Haltenocken (51; 55) zu den Übergangsbereichen (27, 28) unterschiedlich ist.

5. Vorrichtung (1) nach Anspruch 1, **dadurch gekennzeichnet, dass** mindestens ein Heizelementträger (71) eine Tablettragfläche (79) aufweist.

6. Vorrichtung (1) nach Anspruch 1, **dadurch gekennzeichnet, dass** die Temperiervorrichtung (60) beim Versetzen des Lebensmitteltransportbehälters (10) an diesem befestigt ist.

7. Vorrichtung (1) nach Anspruch 1, **dadurch gekennzeichnet, dass** die Temperiervorrichtung (60) ortsfest angeordnet ist und dass der Lebensmitteltransportbehälter (10) mindestens eine Einsetzöffnung (17) zur Aufnahme der Heizelementträger (71) aufweist.

8. Vorrichtung (1) nach Anspruch 1, **dadurch gekennzeichnet, dass** der Innenkorpus (20) in einem Rahmen befestigt ist.

9. Innenkorpus (20) eines Lebensmitteltransportbehälters (10), der zumindest zwei einander gegenüberliegende Seitenwände (21, 22) mit Führungsschienen (25) und Innenwandflächen (24) umfasst, wobei jeweils zwei einander gegenüber angeordnete Führungsschienen eine Tablettaufnahme (23) bilden und wobei jede Tablettaufnahme (23) breiter ist als der kleinste Abstand der Innenwandflächen (24), **dadurch gekennzeichnet,**
- **dass** an einem Ende einer jeden Führungsschiene (25) mindestens ein Haltenocken (51; 55) angeordnet ist und
- **dass** der Haltenocken (51; 55) beabstandet ist zu den Übergangsbereichen (27, 28) zwischen der Führungsschiene (25) und den Innenwandflächen (24).

10. Lebensmitteltransportbehälter (10) mit einem Innenkorpus (20) nach Anspruch 9.

## Claims

1. Apparatus (1) for holding and making available heated food, said apparatus comprising at least one food transport container (10) and heating means (60), wherein
- heating means (60) comprises at least one electrically powered heating element disposed in heating element carrier (71), said heating element being located within food transport container (10) at least while said apparatus is in operation;
- food transport container (10) comprises an interior body (20) at least partially defining inner space (15), said interior body including at least two oppositely arranged side walls (21, 22) having thereon guide rails (25) and inner wall surfaces (24);
- guide rails (25) are oppositely disposed in pairs to form tray supporting means (23); and
- each tray supporting means (23) is wider than the smallest distance between inner wall surfaces (24), **characterized in that**
- guide rails (25) each have a retaining lobe (51; 55) adjacent at least one end thereof and
- said lobes (51; 55) are spaced from transition areas (27, 28) connecting guide rail (25) with inner wall surfaces (24).

2. Apparatus (1) as in claim 1, **characterized by** at least said two side walls (21, 22) being equal or mirror-related to each other.

3. Apparatus (1) as in claim 1, **characterized by** interior body (20) having a top panel (33) and a bottom panel (31), said top and bottom panels (33 and 31, respectively) being equal or mirror-related to each other.

4. Apparatus (1) as in claim 1, **characterized by** different distances between retaining lobes (51; 55) and transition areas (27, 28).

5. Apparatus (1) as in claim 1, **characterized by** at least one heating element carrier (71) having a tray supporting surface (79) thereon.

6. Apparatus (1) as in claim 1, **characterized by** heating means (60) being secured to food transport container (10) as the latter is being moved.

7. Apparatus (1) as in claim 1, **characterized by** heating means (60) being stationary and by food transport container (10) having therein at least one insertion opening (17) for receiving heating element carrier (71).

8. Apparatus (1) as in claim 1, **characterized by** interior body (20) being mounted in a frame structure.

9. Interior body (20) for a food transport container (10), said body comprising at least two oppositely disposed side walls (21, 22) having thereon guide rails (25) and inner wall surfaces (24), said guide rails oppositely disposed in pairs to form tray supporting means (23) and each such tray supporting means (23) being wider than the smallest distance between inner wall surfaces (24), **characterized in that**
- each guide rail (25) has disposed adjacent one end thereof at least one retaining lobe (51; 55); and
- retaining lobes (51; 55) are spaced each from the transition areas (27, 28) between guide rails (25) and inner wall surfaces (24).

10. Food transport container (10) comprising an interior body (20) as defined in patent claim 9.

## Revendications

1. Dispositif (1) de mise à disposition d'aliments tempérés, comprenant au moins un récipient de transport d'aliments (10) et un dispositif de tempérage (60), avec la particularité
- que le dispositif de tempérage (60) comprends au moins un corps de chauffe électrique placé dans un support pour éléments de chauffe (71) qui, au moins lorsque le dispositif de tempérage est en service, se trouve à l'intérieur du récipient de transport d'aliments (10),
- que le récipient de transport d'aliments (10) présente un corps intérieur (20) qui entoure tout au moins partiellement l'intérieur (15) qui est constitué de au moins deux parois intérieures (21, 22) situées l'une en face de l'autre, avec des rails de guidage (25) et des surfaces de paroi intérieure (24),
- que deux rails de guidage (25) situés l'un en face de l'autre forment toujours un logement (23) pour recevoir un plateau et
- que chaque logement (23) est plus large que la plus petite distance entre les surfaces intérieures (24), **caractérise en ce**
- **qu'**un taquet de retenue (51 ; 55) est placé au moins à une extrémité de chaque rail de guidage (25),
- **que** le taquet de retenue (51 ; 55) se trouve à une certaine distance des zones de transition (27, 28) entre le rail de guidage (25) et les surfaces de paroi intérieure (24).

2. Dispositif (1) selon la revendication 1, **caractérisé en ce qu'**au moins les deux parois (21, 22) sont énantiomorphes ou identiques.

3. Dispositif (1) selon la revendicaton 1, **caractérisé en ce que** le corps intérieur (20) comprend un toit (33) et un fond (31), le toit (33) et le fond (31) étant, l'un par rapport à l'autre, énantiomorphes ou identiques.

4. Dispositif (1) selon la revendication 1, **caractérisé en ce que** la distance entre les taquets de retenue (51 ; 55) et les zones de transition (27, 28) est différente.

5. Dispositif (1) selon la revendication 1, **caractérisé en ce qu'**au moins un support pour éléments de chauffe (71) présente une surface porteuse pour plateaux (79).

6. Dispositif (1) selon la revendication 1, **caractérisé en ce que** le dispositif de tempérage (60) est fixé sur le récipient de transport d'aliments (10), lorsque le récipient est déplacé.

7. Dispositif (1) selon la revendication 1, **caractérisé en ce que** le dispositif de tempérage (60) se trouve dans une position fixe et que le récipient de transport d'aliments (10) présente au moins une ouverture (17) pour la réception des supports pour éléments de chauffe (71).

8. Dispositif (1) selon la revendication 1, **caractérisé en ce que** le corps intérieur (20) est fixé dans un cadre.

9. Corps intérieur (20) d'un récipient de transport d'aliments (10) qui comprend au moins deux parois latérales (21, 22), situées l'une en face de l'autre et présentant des rails de guidage (25) et des surfaces de paroi intérieure (24), avec la particularité que deux rails de guidage situés l'un en face de l'autre forment toujours un logement (23) pour recevoir un plateau et que ce logement (23) est plus large que la plus petite distance entre les surfaces intérieures (24), **caractérisé en ce**
- **que** au moins un taquet de retenue (51 ; 55) est placé à une extrémité de chaque rail de guidage (25).
- **que** le taquet de retenue (51 ; 55) se troue à une certaine distance des zones de raccord (27, 28) entre le rail de guidage (25) et les surfaces des paroi intérieures (24).

10. Récipient de transport d'aliments (10) avec un corps intérieur (20) selon la revendication 9.
